# EUROPEAN PATENT APPLICATION

(11) **EP 3 496 059 A1**
(43) Date of publication of application: **12.06.2019**
(21) Application number: 18210989.2
(22) Date of filing: 07.12.2018
(51) Int. Cl.: G07G 1/00, B62B 5/00, G06Q 20/20, G01S 7/52

(54) **CARRIAGE AND INFORMATION PROCESSING DEVICE**

(30) Priority: 08.12.2017 JP 2017235968
(71) Applicant: Toshiba Tec Kabushiki Kaisha, Shinagawa-ku Tokyo (JP)
(72) Inventor: Hara, Noriyoshi, Tokyo, 141-8562 (JP)
(74) Representative: Hoffmann Eitle

(57) **Abstract**

A carriage includes a storage, a sensor, and a computer. The storage is configured to receive a commodity to be placed in the storage. The sensor is configured to acquire a waveform of vibration of the placement unit. The computer is configured to detect that the commodity is placed in the placement unit based upon the waveform acquired by the sensor.

## Description

### CROSS-REFERENCE TO RELATED APPLICATIONS

This application is based upon and claims the benefit of priority from Japanese Patent Application No. 2017-235968, filed in December 8, 2017, the entire contents of which are incorporated herein by reference.

### FIELD

Embodiments described herein relate generally to a carriage and an information processing device.

### BACKGROUND

Proposed is a system in which a shopper places a commodity of which purchase registration is completed in a carriage, while performing the purchase registration of a commodity which is determined to be purchased at a store by using a terminal provided on the carriage such as a shopping cart.

### SUMMARY OF THE INVENTION

One of the objects of the present invention is to improve prior art techniques and overcome at least some of the prior art problems as for instance above illustrated.

According to a first aspect of the invention, it is provided a carriage, comprising a storage configured to receive at least one commodity to be placed therein; a sensor configured to acquire a waveform of vibration of the storage; and a computer configured to detect that the at least one commodity is placed in the storage based upon the waveform acquired by the sensor.

Optionally, the carriage according to the first aspect of the invention further comprises a processor configured to perform predetermined processing with respect to placement of the at least one commodity in response to the detection that the at least one commodity is placed in the storage.

Optionally, in the carriage according to the first aspect of the invention, the computer is further configured to acquire identification data for identifying the at least one commodity to be placed in the storage; and when the identification data is not acquired by the computer during at least one of a predetermined period before the computer detects that the at least one commodity is placed in the storage, or a predetermined period after the detection that the at least one commodity is placed in the storage, the processor is configured to perform processing for a notification operation to output information for notifying that the identification data is not acquired by the computer.

Optionally, in the carriage according to the first aspect of the invention, when the identification data is not acquired by the computer during the at least one predetermined period, the computer is configured to cause a user interface that is attached to the carriage to display guidance to a user.

Optionally, in the carriage according to the first aspect of the invention, the computer is configured to separately store a list of commodities detected by the computer prior to clearing the list of detected commodities acquired by the computer.

Optionally, in the carriage according to the first aspect of the invention, the computer is configured to store, as reference data, information relating to a time during which vibration generated in the storage continues when the at least one commodity is placed in the storage.

According to a second aspect of the invention, it is provided an information processing device which is mounted on a carriage provided with a storage configured to receive at least one commodity to be placed therein, the device comprising a sensor configured to acquire a waveform of vibration of the storage; and a computer configured to detect that the at least one commodity is placed in the storage based upon the waveform acquired by the sensor.

Optionally, the information processing device according to the second aspect of the invention further comprises a processor configured to perform predetermined processing with respect to placement of the at least one commodity in response to the detection that the at least one commodity is placed in the storage.

Optionally, in the information processing device according to the second aspect of the invention, the computer is further configured to acquire identification data for identifying the at least one commodity to be placed in the storage, when the identification data is not acquired by the computer during at least one of a predetermined period before the computer detects that the at least one commodity is placed in the storage, or a predetermined period after the detection that the at least one commodity is placed in the storage, the processor is configured to perform processing for a notification operation to output information for notifying that the identification data is not acquired by the computer.

Optionally, in the information processing device according to the second aspect of the invention, when the identification data is not acquired by the computer during the at least one predetermined period, the computer is configured to cause a user interface that is attached to the carriage to display guidance to a user.

Optionally, in the information processing device according to the second aspect of the invention, the computer is configured to separately store a list of commodities detected by the computer prior to clearing the list of detected commodities acquired by the computer.

Optionally, in the information processing device according to the second aspect of the invention, the computer is configured to store, as reference data, information relating to a time during which vibration generated in the storage continues when the at least one commodity is placed in the storage.

According to a third aspect of the invention, it is provided a method of acquiring commodity information from an apparatus including a storage configured to receive at least one commodity to be placed therein, the method comprising acquiring, by a sensor, a waveform of vibration of the storage; and detecting that the at least one commodity is placed in the storage based upon the waveform acquired by the sensor.

Optionally, the method according to the third aspect of the invention further comprises performing predetermined processing with respect to placement of the at least one commodity in response to the detection that the at least one commodity is placed in the storage.

Optionally, the method according to the third aspect of the invention, further comprises acquiring identification data for identifying the at least one commodity to be placed in the storage, and when the identification data is not acquired during at least one of a predetermined period before the detection that the at least one commodity is placed in the storage, or a predetermined period after the detection that the at least one commodity is placed in the storage, performing a notification operation to output information for notifying that the identification data is not acquired.

Optionally, the method according to the third aspect of the invention, further comprises when the identification data is not acquired during the at least one predetermined period, causing a user interface that is attached to a carriage containing the storage to display guidance to a user.

Optionally, the method according to the third aspect of the invention, further comprises separately storing a list of detected commodities prior to clearing the list of detected commodities.

Optionally, the method according to the third aspect of the invention, further comprises storing, as reference data, information relating to a time during which vibration generated in the storage continues when the at least one commodity is placed in the storage.

### DESCRIPTION OF THE DRAWINGS

FIG. 1 is a block diagram illustrating a main circuit configuration of an electric element provided in a shopping cart according to at least one embodiment;
FIG. 2 is a perspective diagram illustrating an external appearance of the shopping cart illustrated in FIG. 1;
FIG. 3 is a flowchart illustrating a processing procedure relating to detection processing of a CPU in FIG. 1;
FIG. 4 is a diagram illustrating a detection list;
FIG. 5 is a flowchart illustrating a processing procedure relating to sales processing of the CPU in FIG. 1;
FIG. 6 is a flowchart illustrating the processing procedure relating to the sales processing of the CPU in FIG. 1;
FIG. 7 is a flowchart illustrating the processing procedure relating to the sales processing of the CPU in FIG. 1;
FIG. 8 is a diagram illustrating one example of a previous code area;
FIG. 9 is a diagram illustrating one example of a commodity list;
FIG. 10 is a flowchart illustrating a processing procedure relating to sales processing of the CPU in FIG. 1; and
FIG. 11 is a flowchart illustrating the processing procedure relating to the sales processing of the CPU in FIG. 1.

### DETAILED DESCRIPTION

In this type of the system, there is a drawback in that when a commodity of which the purchase registration is not completed is mixed with a commodity of which the purchase registration is completed, and the commodities are placed in the carriage, a salesclerk has difficulty in determining such a state at a glance. Therefore, it is desirable to take some measures to prevent the commodity of which the purchase registration is not completed from being placed in the carriage every time the commodity is placed therein.

In consideration of the above-mentioned circumstance, it is desired to be able to detect that the commodity is placed in the carriage.

At least one embodiment provides a carriage and an information processing device capable of detecting that a commodity is placed.

In general, according to at least one embodiment, a carriage includes a placement unit, an acquisition unit, and a detection unit. The placement unit is configured to place a commodity. The acquisition unit is configured to acquire a waveform of vibration of the placement unit. The detection unit is configured to detect that the commodity is placed in the placement unit based upon the waveform acquired by the acquisition unit.

Hereinafter, embodiments will be described with reference to the drawings. Further, in at least one embodiment, a specific example of an apparatus such as a shopping cart, which is one form of a carriage, will be described.

### First embodiment

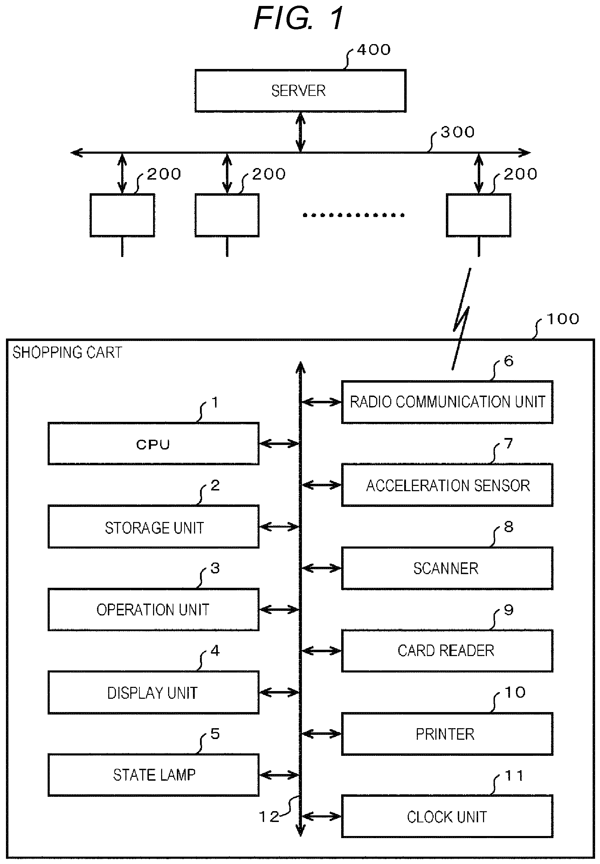

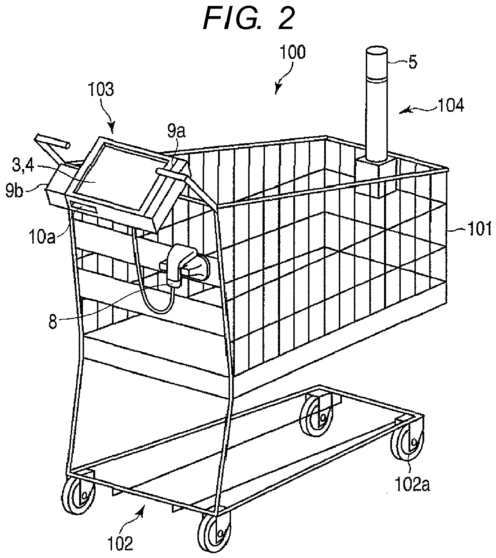

FIG. 1 is a block diagram illustrating a main circuit configuration of an electric element provided in a shopping cart according to a first embodiment. FIG. 2 illustrates a perspective diagram of an external appearance of the shopping cart according to at least one embodiment.

As illustrated in FIG. 1, a shopping cart 100 includes a CPU (central processing unit) 1, a storage unit 2, an operation unit 3, a display unit 4, a state lamp 5, a radio communication unit 6, an acceleration sensor 7, a card reader 9, a printer 10, a clock unit 11, and a bus 12. The CPU 1, the storage unit 2, the operation unit 3, the display unit 4, the state lamp 5, the radio communication unit 6, the acceleration sensor 7, a scanner 8, the card reader 9, the printer 10, and the clock unit 11 are connected to the bus 12.

As illustrated in FIG. 2, the shopping cart 100 includes a commodity basket 101, a traveling mechanism 102, a user interface unit 103, and a lamp unit 104.

The CPU 1 executes information processing which will be described later based upon an operating system, middleware, and an application program stored in the storage unit 2. The CPU 1 forms a central part of a computer configured together with the storage unit 2.

The storage unit 2 includes a ROM (read-only memory) and a RAM (random-access memory). For example, the storage unit 2 may include an auxiliary storage unit such as a hard disk drive and an SSD (solid state drive). The storage unit 2 stores the operating system, the middleware, and the application program. The storage unit 2 sometimes stores data to be referred to when the CPU 1 performs various types of processing. A part of the storage area of the storage unit 2 is used as an area for storing data temporarily used when the CPU 1 performs various types of processing, that is, as a work area. The part of the storage area of the storage unit 2 is used as an area for storing a detection list and a commodity list, which will be respectively described later.

The operation unit 3 is a typical touch sensor. When the operation unit 3 is a touch sensor, the operation unit 3 is disposed to be overlapped on a display surface of the display unit 4. When a display screen of the display unit 4 is touched, the operation unit 3 outputs a detection signal corresponding to a touch position. However, as the operation unit 3, various kinds of operation devices other than the touch sensor can be appropriately used. Further, as the operation unit 3, it is also possible to use a combination of a plurality of touch sensors and other various operation devices.

The display unit 4 is a typical LCD (liquid crystal display) . The display unit 4 displays an image under the control of the CPU 1. Normally, the image displayed by the display unit 4 is an image representing various kinds of information to be presented to a shopper who uses the shopping cart 100.

The state lamp 5 can selectively acquire four display states under the control of the CPU 1. The four display states are, for example, a lighting-off state, a blue lighting state, a yellow lighting state, and a red lighting state. Further, the four display states may be arbitrary as long as a person can visually recognize a difference therebetween. The state lamp 5 is mounted on the lamp unit 104 so that the display state can be recognized by a person in the vicinity of the shopping cart 100. It is desirable that the display state of the state lamp 5 can be visually recognized from anywhere within a range of 360° in a horizontal direction and even from a far distance inside the store.

The radio communication unit 6 communicates with a server 400 through one of a plurality of radio access points 200 and a LAN 300. Further, the radio access point 200 is installed at various positions in the store. The server 400 is a so-called store server provided in the store, a so-called head office server provided in a head office for managing a plurality of stores, or the like. The server 400 performs information processing for aggregating commodity sales data, further managing data used in the shopping cart 100, and the like. The server 400 holds a PLU (price lock up) file relating to the commodities which are sold in the store. The PLU file is a set of data records corresponding to the respective commodities sold in the store. The data records of the PLU file include various kinds of well-known information such as a commodity name, a unit price, and a weight relating to the corresponding commodity in association with a commodity code imparted for identifying the corresponding commodity.

The acceleration sensor 7 is mounted on the commodity basket 101, and measures acceleration generated in the commodity basket 101. The acceleration sensor 7 outputs the measured acceleration in real time.

The scanner 8 scans a bar code representing bar code data including the commodity code for identifying the commodity and outputs the bar code data.

The card reader 9 reads card information recorded in a payment card. Further, the payment card is a card for performing the payment regardless of cash, and may include a credit card, an IC (integrated circuit) card compatible with electronic money, a debit card, a prepaid card, and the like.

The printer 10 is, for example, a thermal printer, a dot impact printer, and the like, and prints a receipt, and the like.

The clock unit 11 performs a clocking operation for determining the time at the current time point, and outputs time data representing the determined time. The clock unit may be a device for determining a date and time and outputting date and time data representing the date and time.

The traveling mechanism 102 is positioned below the commodity basket 101 and supports the commodity basket 101. The traveling mechanism 102 is provided with four wheels 102a in some embodiments and enables traveling by hand-push.

The user interface unit 103 accommodates the CPU 1, the storage unit 2, the operation unit 3, the display unit 4, the radio communication unit 6, the card reader 9, and the printer 10. The user interface unit 103 directs the display surface of the display unit 4 toward the shopper. In at least one embodiment, the card reader 9 corresponds to a magnetic stripe type credit card reader and a non-contact type IC card reader compatible with electronic money. The card reader 9 reads card information from a credit card which is slid by the shopper along a slit 9a. The card reader 9 wirelessly reads the card information from the IC card close to a reading unit 9b. Further, the card reader 9 can read the same kind of information as card information even from an IC chip mounted on a medium other than the IC card. The printer 10 discharges a printed receipt from a discharge port 10a to the outside of the user interface unit 103.

Next, operation of the shopping cart 100 configured as described above will be described.

When starting to use the shopping cart 100 placed in the vicinity of an entrance of the store, the shopper performs a predetermined operation for a start instruction. After that, the shopper moves inside the store while pushing the shopping cart 100. Then, the shopper performs a registration operation for the purchase registration of a commodity which is determined to be purchased and then places the commodity in the commodity basket 101. Alternatively, the shopper places the commodity which is determined to be purchased in the commodity basket 101 and then performs the registration operation for the purchase registration of the commodity. The shopper who purchases a plurality of commodities has a rule of utilization to repeat the above-mentioned operation. The registration operation is an operation of allowing the scanner 8 to be close to the bar code displayed on the purchased commodity, an operation of pressing a button which is included in the operation unit 3 and is associated with the purchased commodity, or the like. Further, placing of the commodity in the commodity basket 101 is hereinafter referred to as a commodity input.

The acceleration sensor 7 constantly performs measurement in some embodiments and outputs the measured acceleration. When the vibration is generated in the commodity basket 101, the vibration appears in an output of the acceleration sensor 7 as a change in acceleration. That is, the output of the acceleration sensor 7 is a waveform signal representing a waveform of the vibration in the commodity basket 101. Thus, the acceleration sensor 7 acquires the waveform of the vibration of the commodity basket 101 functioning as a placement unit or storage for placement of commodities (i.e. a holder that stores the commodities), and functions as the acquisition unit. The output of the acceleration sensor 7 is sampled and stored in the storage unit 2 as waveform data.

The CPU 1 starts execution of two pieces of information processing described hereinafter according to the above-mentioned operation for the start instruction. The two pieces of information processing are hereinafter referred to as detection processing and sales processing. The detection processing is processing for detecting the commodity input. The sales processing is processing for the purchase registration and accounting of the commodity. The CPU 1 executes the detection processing and the sales processing in parallel. The CPU 1 may respectively execute the detection processing and the sales processing according to separate program modules included in one information processing program or may respectively execute the detection processing and the sales processing based upon separate information processing programs. Further, contents of the information processing described hereinafter are one example, and various kinds of processing capable of obtaining the same result can be appropriately used.

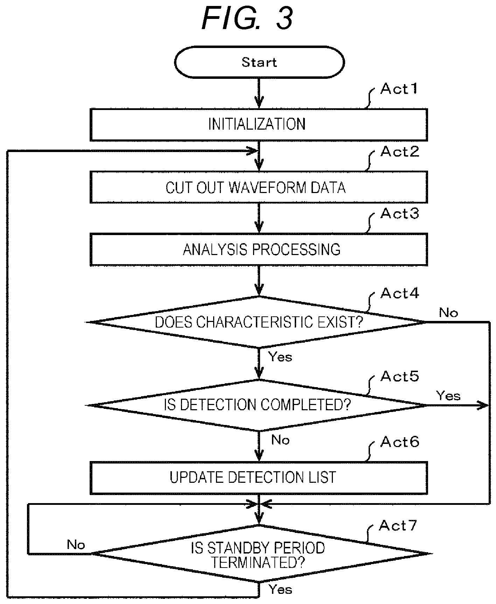

FIG. 3 is a flowchart illustrating a processing procedure of the CPU 1 relating to detection processing.

As Act 1, the CPU 1 performs initialization such as clearing of a detection list.

As Act 2, the CPU 1 cuts out a portion outputted from the acceleration sensor 7 in a predetermined analysis period from among the waveform data stored in the storage unit 2. A length of the analysis period is determined by, for example, a designer of the shopping cart 100 (i.e., the physical parameters or characteristics of the cart according to the design of the cart), and the like in consideration of information such as a time during which the vibration generated in the commodity basket 101 continues when inputting the commodity. Further, the analysis period is defined as, for example, a period in which the time determined as the length of the analysis period starts at a time point going back from the current time point and ends at the current time point. A set value of the length of the analysis period is described in the information processing program or is stored in the storage unit 2 as reference data.

As Act 3, the CPU 1 performs the analysis processing on the waveform data cut out as described above as a target. Specifically, the CPU 1 analyzes amplitude, frequency, and the like of the waveform indicated by the targeted waveform data.

As Act 4, the CPU 1 confirms whether or not a characteristic included in the vibration generated in the commodity basket 101 by the commodity input exists in the above-mentioned analysis result. Further, here, when any kind of the analysis result is obtained, determining whether or not the characteristic exists varies depending on a physical vibration characteristic, and the like of the shopping cart 100. Therefore, when any kind of analysis result is obtained, determining whether or not the characteristic exist may be appropriately determined by the design of the shopping cart 100, and the like. Further, the vibration generated in the commodity basket 101 is mainly caused by traveling, in addition to the vibration caused by the commodity input. Further, the vibrations of both cases are obviously different from each other. Accordingly, it is assumed that conditions for determination are decided so as not to determine that the characteristic exists by the vibration caused by the traveling. Next, the CPU 1 proceeds to Act 5 when it is determined that the characteristic exists.

As Act 5, the CPU 1 confirms whether or not the detection is completed as the commodity input in the past based upon the waveform determined as including the characteristic this time. When executing Act 5 at first, the CPU 1 makes a determination of NO since the commodity input is not detected in the past yet, and proceeds to Act 6.

The CPU 1 updates a detection list as Act 6. The detection list is a list of the detection codes for individually identifying the detection of the commodity input. The CPU 1 determines a detection code which is different from the detection code already included in the detection list according to a predetermined rule, and updates the detection list so as to include the determined detection code.

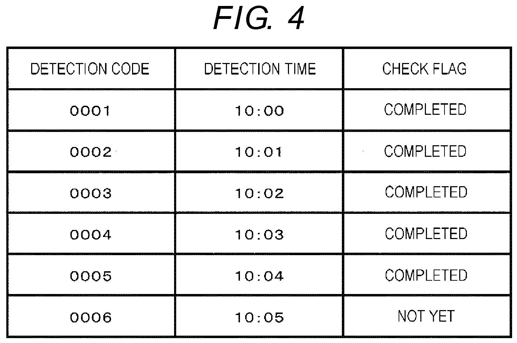

FIG. 4 is a diagram illustrating the detection list.

FIG. 4 illustrates one example of a state after Act 6 performs six times. In the example of FIG. 4, the detection code is defined as a numerical value of four digits in ascending order. However, the detection code may be able to individually identify the detection as the commodity input, or may be determined by another rule. Further, in this example, the detection list describes a detection time and a check flag in association with the detection code. The CPU 1 includes time data outputted by the clock unit 11 when executing Act 6 in the detection list in association with the detection code. Further, the CPU 1 also includes a check flag of a state indicating "NOT YET" in the detection list in association with the detection code. The check flag, as described later, is changed to a state indicating "COMPLETED", and indicates whether or not the acquisition of the commodity code corresponding to the commodity input specified by the associated detection code is completed.

When Act 6 ends, the CPU 1 proceeds to Act 7. Further, when the CPU 1 determines that the characteristic does not exist with respect to the analysis result in Act 3, the CPU 1 makes a determination of No in Act 4, passes Act 6, and proceeds to Act 7.

As Act 7, the CPU 1 waits until a predetermined standby period ends. The standby period determines a cycle of repeating Acts 2 to 6, and is appropriately determined by the design of the shopping cart 100, and the like. As one example, the standby period is defined as a period which starts at a time point when Act 2 is executed and ends at a time point when a predetermined time is elapsed since Act 2 was executed. The CPU 1 measures an elapsed time by referring to an output of the clock unit 11, makes a determination of Yes as the standby period ends when the elapsed time becomes the set value or greater, and returns to Act 2. Then, the CPU 1 repeats the processing after Act 2 in the same manner as described above. The set value of the length of the standby period is described in the information processing program or stored in the storage unit 2 as reference data.

Here, when there is a possibility that the two analysis periods overlap each other in time, the same part of the waveform data may be respectively cut out in the two analysis periods. Further, even when the two analysis periods do not overlap each other in time, waveform data of different portions among the waveforms with respect to the same commodity input may be respectively cut out in separate analysis periods. In these cases, it may be determined that a characteristic exists over a plurality of times in Act 4 with respect to the same commodity input. Then, if processing after Act 2 is repeated, when the waveform data to be cut out represents a part of the vibration generated by inputting the commodity of which detection is already completed, the CPU 1 makes a determination of Yes in Act 5, passes Act 6, and proceeds to Act 7. In other words, the CPU 1 does not perform detection of a new commodity input.

The CPU 1 detects the commodity input based upon the waveform acquired by the acceleration sensor 7 performed as the acquisition unit by executing the detection processing as described above. Thus, the CPU 1 executes the detection processing, whereby a computer including the CPU 1 as a central part functions as a detection unit (a detector).

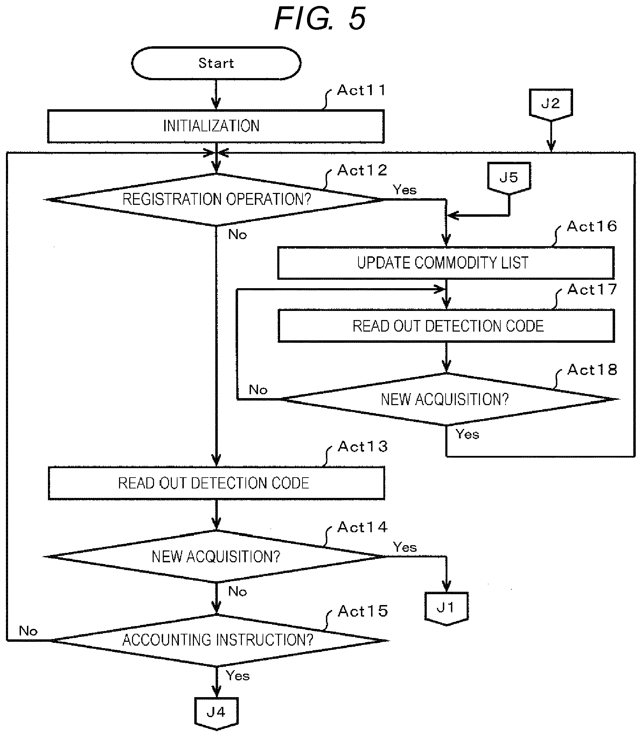

FIGS. 5, 6, and 7 are flowcharts illustrating the processing procedures of the CPU 1 relating to the sales processing.

As Act 11 in FIG. 5, the CPU 1 performs initialization such as clearing of the commodity list and the previous code area. The commodity list is a list of the commodity codes which are acquired for the purchase registration and is stored in the storage unit 2. The previous code area is set in the storage unit 2 and is an area for storing one of the detection codes included in the detection list.

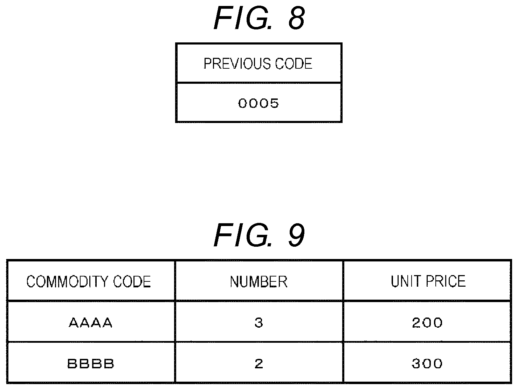

FIG. 8 illustrates one example of the previous code area.

As Act 12, the CPU 1 confirms whether or not the registration operation for the purchase registration of the commodity is performed. Then, the CPU 1 makes a determination of No when the corresponding operation is not performed, and proceeds to Act 13.

As Act 13, the CPU 1 reads out the detection code which is most recently added to the detection list. Specifically, the CPU 1 reads out the largest detection code included in the detection list. Further, the CPU 1 may read out the detection code of which the associated detection time is the latest.

As Act 14, the CPU 1 confirms whether or not a new detection code which is not read out so far is acquired by the above-mentioned reading. Further, the CPU 1 writes the detection code newly read out in the previous code area after the termination of the determination. Thus, when the detection code newly read out coincides with the detection code stored in the previous code area, the CPU 1 can determine that the new detection code is not acquired. Further, the CPU 1 determines that the new detection code is not acquired when the commodity input is not detected yet and even one detection list is not included in the detection list. Then, in these cases, the CPU 1 makes a determination of No in Act 14, and proceeds to Act 15.

As Act 15, the CPU 1 confirms whether or not an operation for instructing a shift to the accounting processing is performed. Then, for example, the CPU 1 makes a determination of No when the corresponding operation such as pressing of a subtotal key provided in the operation unit 3 is not performed, and returns to Act 12.

Thus, the CPU 1 waits for the execution of the registration operation, the acquisition of the new detection code, or the instruction of the shift to the accounting processing as Acts 12 to 15.

When the registration operation by the shopper is performed, the CPU 1 makes a determination of Yes in Act 12, and proceeds to Act 16.

As Act 16, the CPU 1 acquires a commodity code of a commodity designated as a target of the purchase registration by the registration operation, and updates a commodity list so as to include the commodity code. Here, the CPU 1 acquires the commodity code acquired according to the registration operation as identification data for identifying the commodity placed in the commodity basket 101. Thus, the CPU 1 executes the information processing based upon the information processing program, whereby the computer including the CPU 1 as the central part functions as the acquisition unit.

FIG. 9 is a diagram illustrating one example of a commodity list.

FIG. 9 illustrates a commodity list when three pieces of commodities of which commodity codes are "AAAA" and two pieces of commodities of which commodity codes are "BBBB" are acquired.

As Act 17, the CPU 1 reads out the detection code which is most recently added to the detection list.

As Act 18, the CPU 1 confirms whether or not a new detection code which is not read out so far is acquired by the above-mentioned reading. Then, the CPU 1 makes a determination of No when the new detection code is not acquired because the next new commodity input is not detected by the detection processing, and returns to Act 17.

Thus, the CPU 1 waits for the new detection code to be read out as Acts 17 and 18. Further, the CPU 1 performs Acts 17 and 18 by, specifically, the same processing as that of Acts 13 and 14. Then, when the new detection code is read out, the CPU 1 makes a determination of Yes in Act 18 and returns to a standby state of Acts 12 to 15. At this time, the CPU 1 also updates the check flag which is included in the detection list in association with the detection code read out in Act 17 to a state indicating "completed".

As described above, when the registration operation is performed prior to the commodity input, the CPU 1 returns to the standby state of Acts 12 to 15 after the commodity input is performed thereafter.

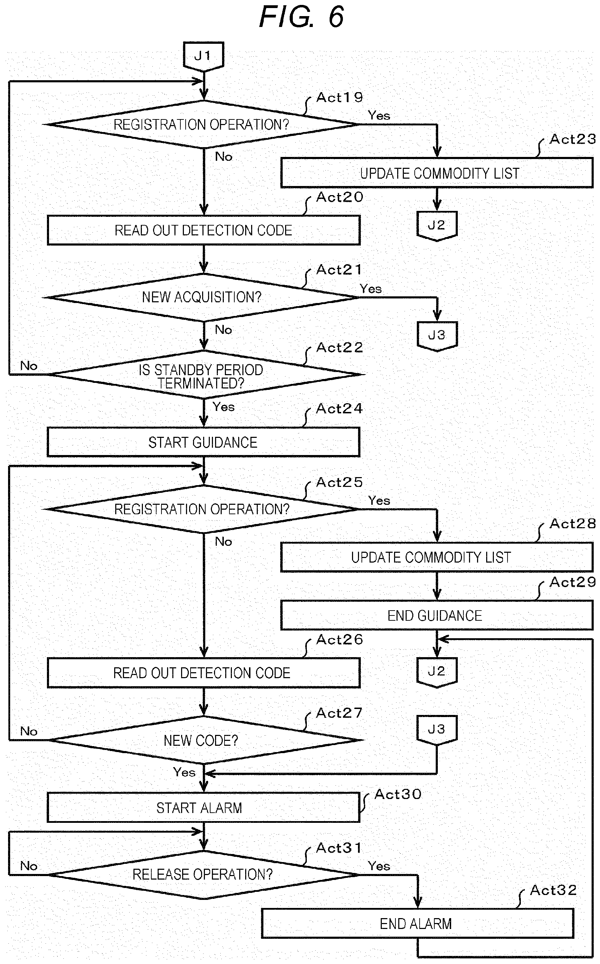

When the detection code newly read out in Act 13 does not coincide with the detection code stored in the previous code area, the CPU 1 makes a determination of Yes in Act 14 as the new detection code is acquired, and proceeds to Act 19 in FIG. 6.

As Act 19, the CPU 1 confirms whether or not the registration operation is performed. Then, the CPU 1 makes a determination of No when the corresponding operation is not performed, and proceeds to Act 20.

As Act 20, the CPU 1 reads out the detection code which is most recently added to the detection list.

As Act 21, the CPU 1 confirms whether or not a new detection code which is not read out so far is acquired by the above-mentioned reading. Further, the CPU 1 performs Acts 20 and 21 by, specifically, the same processing as that of Acts 13 and 14. Then, the CPU 1 makes a determination of No when the new detection code is not acquired because the next new commodity input is not detected by the detection processing, and proceeds to Act 22.

As Act 22, the CPU 1 confirms whether or not a predetermined standby period ends. The standby period is a period of waiting for the registration operation when the registration operation is performed after the commodity input. The standby period may be appropriately determined by the design of the shopping cart 100, and the like. Then, when the standby period does not end, the CPU 1 makes a determination of No and returns to Act 19. The length of the standby period is appropriately determined by the design of the shopping cart 100, and the like. The set value of the length of the standby period is described in the information processing program or stored in the storage unit 2 as reference data.

Thus, the CPU 1 waits for the execution of the registration operation, the acquisition of the new detection code, or the end of the standby time as Acts 19 to 22.

When the registration operation by the shopper is performed within the standby period, the CPU 1 makes a determination of Yes in Act 19, and proceeds to Act 23.

As Act 23, the CPU 1 acquires a commodity code of a commodity designated as a target of the purchase registration by the registration operation, and updates a commodity list so as to include the commodity code. Then, the CPU 1 returns to the standby state of Acts 12 to 15 in FIG. 5. That is, at this time, the CPU 1 determines that the shopper performs the registration operation for the purchase registration of the commodity after the commodity determined to be purchased is placed in the commodity basket 101 according to the above-mentioned rule, and returns to the standby state of Acts 12 to 15. At this time, the CPU 1 updates the check flag which is included in the detection list in association with the detection code read out in Act 13 to the state indicating "completed".

Meanwhile, when the standby period ends without performing the registration operation and without acquiring the new detection code, the CPU 1 makes a determination of Yes in Act 22, and proceeds to Act 24.

As Act 24, the CPU 1 starts guidance for urging the shopper to perform the registration operation for the purchase registration of a commodity placed last in the commodity basket 101. The guidance is assumed to be performed as a display on the display unit 4 of a predetermined guidance screen. However, the guidance may be performed by another method such as an output of a voice message by being changed to the display or being added to the display. In other words, in this state, the shopper does not act against the rule yet, but since the shopper may act against the rule without knowing the rule, the shopper is guided to act correctly. The display of the guidance screen is one example of an output of information for notifying that the purchase registration of the commodity placed in the commodity basket 101 is not completed yet. Then, the CPU 1 performs processing for a notification operation for outputting the information. Thus, the CPU 1 performs the information processing based upon the information processing program, whereby the computer including the CPU 1 as the central part functions as a processing unit for performing such processing.

As Act 25, the CPU 1 confirms whether or not the registration operation is performed. Then, the CPU 1 makes a determination of No when the corresponding operation is not performed, and proceeds to Act 26.

As Act 26, the CPU 1 reads out the detection code which is most recently added to the detection list.

As Act 27, the CPU 1 confirms whether or not a new detection code which is not read out so far is acquired by the above-mentioned reading. Further, the CPU 1 performs Acts 26 and 27 by, specifically, the same processing as that of Acts 13 and 14. Then, the CPU 1 makes a determination of No when the new detection code is not acquired because the next new commodity input is not detected by the detection processing, and returns to Act 25.

Thus, the CPU 1 waits for the execution of the registration operation or the acquisition of the new detection code as Acts 25 to 27. When the CPU 1 is in the standby state of Acts 25 to 27, the CPU 1 may notify a salesclerk of the above-mentioned standby state by lighting up the state lamp 5 with yellow lighting, and the like. When the standby state continues, it may be considered that the shopper is not familiar with the standby state. Therefore, when the salesclerk can recognize the standby state by lighting up the state lamp 5 with the yellow lighting, and the like, it is possible to take measures such as speaking to or otherwise communicating with the shopper.

When the registration operation by the shopper is performed, the CPU 1 makes a determination of Yes in Act 25, and proceeds to Act 28.

As Act 28, the CPU 1 updates a commodity list so as to include a commodity code of a commodity designated as a target of the purchase registration by the registration operation.

As Act 29, the CPU 1 terminates the guidance started in Act 24. Then, the CPU 1 returns to the standby state of Acts 12 to 15 in FIG. 5. That is, at this time, the CPU 1 determines that the shopper performs the registration operation for the purchase registration of the commodity after the commodity determined to be purchased is placed in the commodity basket 101 according to the above-mentioned rule, and returns to the standby state of Acts 12 to 15.

When the shopper performs the next commodity input without performing the registration operation according to the guidance, a new detection code is added to the detection list by the detection processing. Then, the CPU 1 makes a determination of Yes in Act 27, and proceeds to Act 30.

As Act 30, the CPU 1 starts an alarm. The alarm notifies the shopper and the salesclerk that the shopper performs an erroneous operation which does not comply with the rule. It is assumed that the alarm is performed by the display of the display unit 4 of a predetermined alarm screen and red lighting on the state lamp 5. However, contents of the alarm may be arbitrary, and may be appropriately determined by the design of the shopping cart 100, and the like.

As Act 31, the CPU 1 waits for a release operation to be performed. The release operation is predetermined and is performed by the salesclerk for releasing the alarm. When the salesclerk confirms the alarm by the red lighting on the state lamp 5, the salesclerk performs the release operation. Further, measures against errors such as checking of the commodity list with the commodity placed in the commodity basket 101 are appropriately performed. The CPU 1 makes a determination of Yes when the release operation is performed in this manner, and proceeds to Act 32. As Act 32, the CPU 1 terminates the alarm started in Act 30. After that, the CPU 1 returns to the standby state of Acts 12 to 15 in FIG. 5.

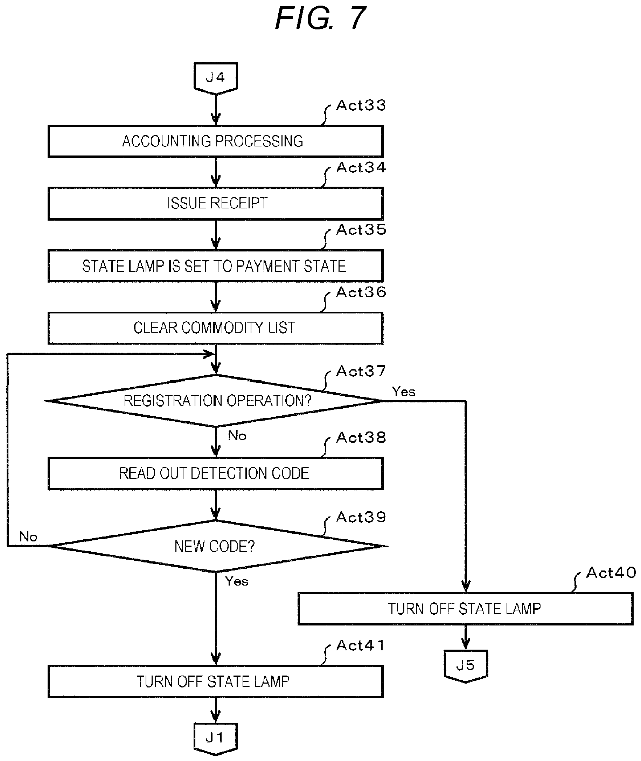

Meanwhile, when the shopper completes the purchase registration for all the commodities to be purchased and the commodity inputs in the commodity basket 101, and the CPU 1 is in the standby state of Acts 12 to 15 in FIG. 5, the operation for instructing the shift to the accounting processing is performed. In response to the above-mentioned processing, the CPU 1 makes a determination of Yes in Act 15, and proceeds to Act 33 in FIG. 7.

As Act 33, The CPU 1 performs the accounting processing. That is, the CPU 1 calculates a price with respect to the purchase of all the commodities indicated in the commodity list. Then, the CPU 1 settles the payment for the price by well-known processing using the information acquired by the card reader 9 from the payment card. Further, the payment may be performed by using another payment device. That is, the CPU 1 notifies the payment device of the calculated price through, for example, the radio access point 200 and the LAN 300. In the payment device, the payment for the notified price is settled by an arbitrary payment method. In the payment in this case, cash payment can also be applied thereto. Further, during the accounting processing, the CPU 1 may appropriately access the server 400, for example, in order to acquire a unit price, and the like.

As Act 34, the CPU 1 issues a receipt. Specifically, the CPU 1 generates a receipt image representing the commodity list, the payment result, and the like, and instructs the printer 10 to print out the receipt image.

As Act 35, the CPU 1 sets the state lamp 5 to a payment state. The payment state is a state of informing the shopper and a person in the vicinity of the shopping cart 100 that the payment is completed, and, for example, it is assumed that the payment state is set to a state of blue lighting.

As Act 36, the CPU 1 clears the commodity list. Further, the CPU 1 may separately store the commodity list before clearing as a list of the commodities of which the payment is completed, in the storage unit 2. In this manner, even when the shopper performs the commodity input for the additional purchase, it is possible to confirm the commodity of which the payment is completed, by referring to the list of the commodities of which the payment is completed.

As Act 37, the CPU 1 confirms whether or not the registration operation is performed. Then, the CPU 1 makes a determination of No when the corresponding operation is not performed, and proceeds to Act 38.

As Act 38, the CPU 1 reads out the detection code which is most recently added to the detection list.

As Act 39, the CPU 1 confirms whether or not a new detection code which is not read out so far is acquired by the above-mentioned reading. Then, the CPU 1 makes a determination of No when the new detection code is not acquired because the next new commodity input is not detected by the detection processing, and returns to Act 38. Further, the CPU 1 performs Acts 38 and 39 by, specifically, the same processing as that of Acts 13 and 14.

Thus, the CPU 1 waits for the execution of the registration operation for the purchase registration of the new commodity or the acquisition of the new detection code as Acts 37 to 39.

When the shopper performs the registration operation for an additionally purchased commodity, the CPU 1 makes a determination of Yes in Act 37, and proceeds to Act 40.

As Act 40, the CPU 1 turns off the state lamp 5. That is, the CPU 1 eliminates the state of informing the shopper and the person in the vicinity of the shopping cart 100 that the payment is completed. Then, the CPU 1 performs the processing after Act 16 in FIG. 5 in the same manner as described above. In other words, the CPU 1 restarts addition of the commodity code to the commodity list which is cleared in Act 36.

Further, when the shopper performs the commodity input without performing the registration operation for an additional purchase, the CPU 1 makes a determination of Yes in Act 39, and proceeds to Act 41.

As Act 41, the CPU 1 turns off the state lamp 5. That is, the CPU 1 eliminates the state of informing the shopper and the person in the vicinity of the shopping cart 100 that the payment is completed. Then, the CPU 1 returns to the standby state of Acts 19 to 22 in FIG. 6. In other words, the CPU 1 shifts to a state where the CPU 1 waits for the execution of the registration operation with respect to the inputted commodity.

As described above, even though the payment is once completed, the CPU 1 can start processing for additional shopping as it is.

Meanwhile, when the CPU 1 is in the standby state of Acts 19 to 22 in FIG. 6, it is assumed that the shopper performs the next commodity input without performing the purchase registration with respect to the commodity which is inputted therein. This behavior is clearly against the rule. When the commodity input is detected by the detection processing, the CPU 1 makes a determination of Yes in Act 21 since the new detection code is acquired in Act 20, proceeds to Act 30, and executes the processing after Act 30 in the same manner as described above. In other words, the CPU 1 issues the alarm with respect to such a commodity input.

Further, in the shopping cart 100 in the standby state of Acts 37 to 39 in FIG. 7, for example, when the CPU 1 performs a predetermined termination operation by the salesclerk, the CPU 1 terminates the detection processing and the sales processing, and shifts to a state of waiting for the operation for the start instruction.

As described above, according to the shopping cart 100, it is possible to detect the commodity input in the commodity basket 101 based upon the vibration of the commodity basket 101.

Additionally, according to the shopping cart 100, when the purchase registration is not performed within a predetermined period before or after the commodity input, the shopping cart 100 performs the guidance for informing the shopper that the commodity registration should be performed by the display of the guidance screen, and the like. Accordingly, it is possible to prevent the commodity, the purchase registration of which is not performed, from being left in the state of being placed in the commodity basket 101.

### Second embodiment

Additionally, a shopping cart according to a second embodiment will be described.

Further, a configuration of the shopping cart of the second embodiment may be the same as that of the first embodiment, and detailed descriptions thereof will be omitted with reference to FIGS. 1 and 2.

A difference between an operation of the shopping cart 100 in the second embodiment and that of the first embodiment is a content of the information processing by the CPU 1. However, the CPU 1 may execute the detection processing in the same manner as that of the first embodiment. Then, with respect to the sales processing, the information processing described hereinafter is executed.

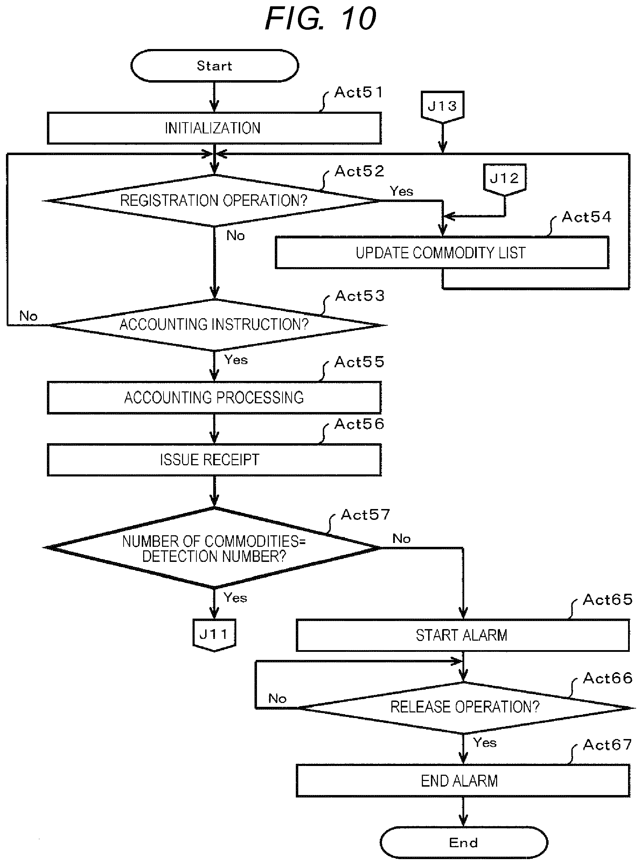

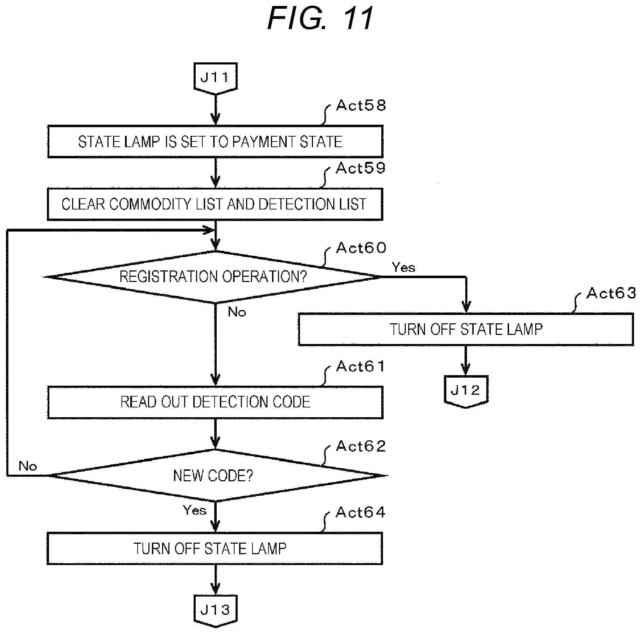

FIGS. 10 and 11 are flowcharts illustrating the processing procedures of the CPU 1 relating to the sales processing. Further, detailed descriptions will be omitted for processing which is the same as the processing executed in the sales processing in the first embodiment.

As Act 51, the CPU 1 performs initialization such as clearing of the commodity list. The commodity list may be the same as that of the first embodiment.

As Act 52, the CPU 1 confirms whether or not the registration operation for the purchase registration of the commodity is performed. Then, the CPU 1 makes a determination of No when the corresponding operation is not performed, and proceeds to Act 53.

As Act 53, the CPU 1 confirms whether or not an operation for instructing the shift to the accounting processing is performed. Next, the CPU 1 makes a determination of No, for example, when the corresponding operation such as pressing of the subtotal key provided in the operation unit 3 is not performed, and returns to Act 52.

Thus, the CPU 1 waits for the execution of the registration operation or the execution of the instruction of the shift to accounting processing as Acts 52 and 53.

When the registration operation by the shopper is performed, the CPU 1 makes a determination of Yes in Act 52, and proceeds to Act 54.

As Act 54, the CPU 1 acquires a commodity code of a commodity designated as a target of the purchase registration by the registration operation, and updates a commodity list so as to include the commodity code. Here, the CPU 1 acquires the commodity code acquired according to the registration operation as identification data for identifying the commodity placed in the commodity basket 101. Thus, the CPU 1 performs the information processing based upon the information processing program, whereby the computer including the CPU 1 as the central part functions as the acquisition unit.

Then, the CPU 1 returns to the standby states of Acts 52 and 53 after updating the commodity list.

Meanwhile, if the shopper completes the purchase registration of all the commodities to be purchased and the inputs of the commodities in the commodity basket 101, when the CPU 1 is in the standby state of Acts 52 and 53 in FIG. 10, the CPU 1 performs the operation for instructing the shift to the accounting processing. In response to the above-mentioned processing, the CPU 1 makes a determination of Yes in Act 53, and proceeds to Act 55.

As Act 55, the CPU 1 performs the accounting processing.

As Act 56, the CPU 1 issues a receipt.

The accounting processing and issuing the receipt are performed in the same manner as those of the first embodiment.

As Act 57, the CPU 1 confirms whether or not the number of commodities registered for the purchase coincides with the detection number of the commodity inputs. Specifically, the CPU 1 compares the number of commodities indicated in the commodity list with the number of detection codes included in the detection list. Next, the CPU 1 makes a determination of Yes when the number of commodities indicated in the commodity list coincides with the number of detection codes included in the detection list, and proceeds to Act 58 in FIG. 11.

As Act 58, the CPU 1 sets the state lamp 5 to a payment state. The payment state is a state of informing the shopper and a person in the vicinity of the shopping cart 100 that the payment is completed, and, for example, it is assumed that the payment state is set to a state of blue lighting.

As Act 59, the CPU 1 clears the commodity list and the detection list. Further, the CPU 1 may separately store the commodity list before clearing as a list of the commodities of which the payment is completed, in the storage unit 2. In this manner, even when the shopper performs the commodity input for the additional purchase, it is possible to confirm the commodity of which the payment is completed, by referring to the list of the commodities of which the payment is completed. Further, the CPU 1 may also separately store the detection list before clearing as a list of the detection with respect to the inputs of the commodities of which the payment is completed, in the storage unit 2. In this manner as described above, even when the shopper performs the commodity input for the additional purchase, it is possible to confirm the total number of the commodity inputs as a sum of the number of the detection codes respectively included in the detection list and the detection list with respect to the input of the commodity of which the payment is completed.

As Act 60, the CPU 1 confirms whether or not the registration operation is performed. Then, the CPU 1 makes a determination of No when the corresponding operation is not performed, and proceeds to Act 61.

As Act 61, the CPU 1 reads out the detection code which is most recently added to the detection list.

As Act 62, the CPU 1 confirms whether or not a new detection code which is not read out so far is acquired by the above-mentioned reading. Further, the confirmation may be performed in the same manner as that of the first embodiment. Then, the CPU 1 makes a determination of No when the new detection code is not acquired because the next new commodity input is not detected by the detection processing, and returns to Act 60.

Thus, as Acts 60 to 62, the CPU 1 waits for the execution of the registration operation for the purchase registration of the new commodity or the acquisition of the new detection code.

When the shopper performs the registration operation for an additionally purchased commodity, the CPU 1 makes a determination of Yes in Act 60, and proceeds to Act 63.

As Act 63, the CPU 1 turns off the state lamp 5. That is, the CPU 1 eliminates the state of informing the shopper and the person in the vicinity of the shopping cart 100 that the payment is completed. Then, the CPU 1 performs the processing after Act 54 in FIG. 10 in the same manner as described above. In other words, the CPU 1 restarts addition of the commodity code to the commodity list which is cleared in Act 59.

Further, when the shopper performs the commodity input without performing the registration operation for the additional purchase, the CPU 1 makes a determination of Yes in Act 62, and proceeds to Act 64.

As Act 64, the CPU 1 turns off the state lamp 5. That is, the CPU 1 eliminates the state of informing the shopper and the person in the vicinity of the shopping cart 100 that the payment is completed. Then, the CPU 1 returns to the standby state of Acts 52 and 53 in FIG. 10. In other words, the CPU 1 shifts to the state where the CPU 1 waits for the execution of the registration operation with respect to the inputted commodity.

As described above, even though the payment is once completed, the CPU 1 can start the processing for the additional shopping as it is.

Meanwhile, when the number of commodities indicated in the commodity list does not coincide with the number of the detection codes included in the detection list, the CPU 1 makes a determination of No in Act 57 in FIG. 10, and proceeds to Act 65.

As Act 65, the CPU 1 starts an alarm. The alarm notifies the shopper and the salesclerk that the number of commodities registered for the purchase does not coincide with the detection number of the commodity inputs. It is assumed that the alarm is performed by the display of the display unit 4 of a predetermined alarm screen and red lighting on the state lamp 5. However, contents of the alarm may be arbitrary and may be appropriately determined by the design of the shopping cart 100, and the like.

As Act 66, the CPU 1 waits for a release operation to be performed. The release operation is predetermined and is performed by the salesclerk for releasing the alarm. When the salesclerk confirms the alarm by the red lighting on the state lamp 5, the salesclerk performs the release operation. Further, measures against errors such as checking of the commodity list with the commodity placed in the commodity basket 101 are appropriately performed. The CPU 1 makes a determination of Yes when the release operation is performed in this manner, and proceeds to Act 67.

As Act 67, the CPU 1 terminates the alarm started in Act 65. After that, the CPU 1 terminates the sales processing illustrated in FIGS. 10 and 11.

As described above, according to the shopping cart 100 of the second embodiment, it is possible to detect the commodity input in the commodity basket 101 based upon the vibration of the commodity basket 101.

Additionally, according to the shopping cart 100 of the second embodiment, after the payment is completed, when the number of commodities registered for the purchase does not coincide with the detection number of the commodity inputs, the above-mentioned state is alarmed. Accordingly, when the commodities registered for the purchase do not coincide with the commodities which are placed in the commodity basket 101, the salesclerk, and the like can appropriately perform the measures.

Additionally, according to the shopping cart 100 of the second embodiment, the shopper is not required to consider the order of the operation for the purchase registration and the commodity input.

In at least one embodiment, various modifications can be implemented as described hereinafter.

The user interface unit 103 can be attached to and detached from a main body of the shopping cart 100, and while being mounted thereon, the user interface unit 103 can be fixed to the shopping cart 100 so that the vibration of the commodity basket 101 is sufficiently transmitted to the user interface unit 103. Furthermore, the acceleration sensor 7 is incorporated in the user interface unit 103. Then, the main body of the shopping cart 100 and the information processing device used as the user interface unit 103 may be individually transferred. In this case, the user interface unit 103 can be implemented by installing the information processing program for the detection processing and the sales processing in the information processing device such as an existing tablet terminal.

Whether or not the payment is completed with respect to each of the commodities indicated in the commodity list may be managed, for example, by associating a flag with each of the commodities. Then, the CPU 1 may add the commodity of which the registration instruction is performed after the accounting processing, to the commodity list as an unpaid commodity, and the commodity list may not be cleared. In this case, the CPU 1 settles the payment for the price with respect to the commodity managed as unpaid. Accordingly, the commodity can be additionally purchased after the payment is completed.

The processing which is performed in response to the detection of the commodity input, such as counting of the number of commodities placed in the commodity basket 101 as the number of detected times of the commodity inputs, or executing of the operation of notifying the shopper that the commodity input is detected in response to the detection of the commodity input, can be arbitrarily changed. Further, the number of commodities can be counted as the number of detection codes included in the detection list.

The waveform of the vibration may be acquired by another unit such as a weight sensor instead of the acceleration sensor 7 .

For example, a part of the processing for the sales processing such as the update of the commodity list may be performed by a device different from the shopping cart 100 such as the server 400.

The same embodiment can be performed by being able to detect the vibration caused by the placement of the commodity even in a different type of carriage such as one provided with a commodity basket different from the commodity basket 101, one only provided with a placement plate without the commodity basket, and one provided with a hook to hook up the commodity.

The rule for using the shopping cart 100 can be arbitrarily changed. For example, as a rule, only one of the operation of placing the commodity in the commodity basket 101 after the registration operation for the purchase registration, or the operation of performing the registration operation of the commodity after the commodity determined to be purchased is placed in the commodity basket 101 may be allowed. Then, the processing illustrated in FIG. 6 of the sales processing is appropriately changed so that the guidance is performed on an operation having a possibility to be against the rule, and the alarm is performed on an operation against the rule.

Respective functions implemented by the CPU 1 by the information processing can also be implemented partly or wholly by hardware which performs information processing not based upon a program such as a logic circuit. Further, the respective functions can also be implemented by combining software control with hardware such as the logic circuit.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims and their equivalents are intended to cover such forms or modifications as would fall within the scope of the inventions.

## Claims

1. A carriage, comprising:
a storage configured to receive at least one commodity to be placed therein;
a sensor configured to acquire a waveform of vibration of the storage; and
a computer configured to detect that the at least one commodity is placed in the storage based upon the waveform acquired by the sensor.

2. The carriage according to claim 1, further comprising:
a processor configured to perform predetermined processing with respect to placement of the at least one commodity in response to the detection that the at least one commodity is placed in the storage.

3. The carriage according to claim 1 or 2, wherein:
the computer is further configured to acquire identification data for identifying the at least one commodity to be placed in the storage; and
when the identification data is not acquired by the computer during at least one of a predetermined period before the computer detects that the at least one commodity is placed in the storage, or a predetermined period after the detection that the at least one commodity is placed in the storage, the processor is configured to perform processing for a notification operation to output information for notifying that the identification data is not acquired by the computer.

4. The carriage according to claim 3, wherein when the identification data is not acquired by the computer during the at least one predetermined period, the computer is configured to cause a user interface that is attached to the carriage to display guidance to a user.

5. The carriage according to any of claims 1 to 4, wherein the computer is configured to separately store a list of commodities detected by the computer prior to clearing the list of detected commodities acquired by the computer.

6. The carriage according to any of claims 1 to 5, wherein the computer is configured to store, as reference data, information relating to a time during which vibration generated in the storage continues when the at least one commodity is placed in the storage.

7. An information processing device which is mounted on a carriage provided with a storage configured to receive at least one commodity to be placed therein, the device comprising:
a sensor configured to acquire a waveform of vibration of the storage; and
a computer configured to detect that the at least one commodity is placed in the storage based upon the waveform acquired by the sensor.

8. The information processing device according to claim 7, further comprising:
a processor configured to perform predetermined processing with respect to placement of the at least one commodity in response to the detection that the at least one commodity is placed in the storage.

9. The information processing device according to claim 7 or 8, wherein:
the computer is further configured to acquire identification data for identifying the at least one commodity to be placed in the storage,
when the identification data is not acquired by the computer during at least one of a predetermined period before the computer detects that the at least one commodity is placed in the storage, or a predetermined period after the detection that the at least one commodity is placed in the storage, the processor is configured to perform processing for a notification operation to output information for notifying that the identification data is not acquired by the computer.

10. A method of acquiring commodity information from an apparatus including a storage configured to receive at least one commodity to be placed therein, the method comprising:
acquiring, by a sensor, a waveform of vibration of the storage; and
detecting that the at least one commodity is placed in the storage based upon the waveform acquired by the sensor.

11. The method according to claim 10, further comprising:
performing predetermined processing with respect to placement of the at least one commodity in response to the detection that the at least one commodity is placed in the storage.

12. The method according to claim 10 or 11, further comprising:
acquiring identification data for identifying the at least one commodity to be placed in the storage, and
when the identification data is not acquired during at least one of a predetermined period before the detection that the at least one commodity is placed in the storage, or a predetermined period after the detection that the at least one commodity is placed in the storage, performing a notification operation to output information for notifying that the identification data is not acquired.

13. The method according to claim 12, further comprising:
when the identification data is not acquired during the at least one predetermined period, causing a user interface that is attached to a carriage containing the storage to display guidance to a user.

14. The method according to any of claims 10 to 13, further comprising separately storing a list of detected commodities prior to clearing the list of detected commodities.

15. The method according to any of claims 10 to 14, further comprising storing, as reference data, information relating to a time during which vibration generated in the storage continues when the at least one commodity is placed in the storage.
